# EUROPEAN PATENT APPLICATION

(11) **EP 4 703 027 A1**
(43) Date of publication of application: **04.03.2026**
(21) Application number: 25179707.2
(22) Date of filing: 29.05.2025
(51) Int. Cl.: B01D 53/62, B01D 53/78

(54) **A CARBON DIOXIDE ADSORPTION SYSTEM SUITABLE FOR USE IN AN AIR PURIFIER**

(30) Priority: 03.09.2024 TR 2024011613
(71) Applicant: Arçelik Anonim Sirketi, 34445 Istanbul (TR)
(72) Inventor: TARKUC, SIMGE, 34445 ISTANBUL (TR); YESILCUBUK, ALPER, 34445 ISTANBUL (TR); KAYISDAG, VAROL, 34445 ISTANBUL (TR); CALAPKULU, YASEMIN, 34445 ISTANBUL (TR)

(57) **Abstract**

The present invention relates to a carbon dioxide adsorption system (1) which is suitable to be used in an air purifier purifying the air in indoor environments. The carbon dioxide adsorption system (1) comprises at least one first tank (4) which has an air inlet (2) and an air outlet (3) and which stores a basic solution suitable for adsorbing the carbon dioxide in the air.

## Description

The present invention relates to a carbon dioxide adsorption system which is suitable to be used in an air purifier purifying the air in indoor environments.

Today, the need for ventilation and the need for fresh air become more important in environments such as homes and offices especially in high-rise buildings. Plants can be a temporary solution for daytime but when the sunlight disappears, plants also start to produce carbon dioxide like human beings and the air quality of the environment decreases. Especially in high-rise buildings, it is not always possible to continuously keep the windows open and ventilate the environment. The continuously rising carbon dioxide density in the air adversely affects human health. The amount of oxygen in the environment directly affects the metabolic rate of people and the lack thereof creates weakness and fatigue in humans. Ensuring that the amount of oxygen in the closed environment does not fall below a certain level while reducing the amount of carbon dioxide generated in the environment makes the human metabolism much more vivid and vigorous.

Today, air purifiers are known, which comprise carbon dioxide adsorbing filters and which purifies the indoor air. However, in most of these devices, it is very difficult for the user to periodically clean the filter or problems such as bacterial formation in the filter are encountered.

In the state of the art European Patent Document No. EP3842123, an air purifier is disclosed, which adsorbs carbon dioxide gas by passing the indoor air through a basic solution and which returns the clean air, purified of carbon dioxide gas, back into the indoor environment. In the said air purifier, the reaction of carbon dioxide gas with the basic solution results in the formation of carbonate (MHCO₃ and/or MCO₃). The carbon dioxide adsorption efficiency of the basic solution decreases as the amount of carbon dioxide passed through and retained in the solution increases.

In the state of the art, especially as summarized in the above-mentioned European patent document, methods are used to periodically renew (i.e., regenerate) the basic solution to maintain the indoor air quality at a desired level by adsorbing carbon dioxide. In an exemplary method, the carbonate solution is transferred to a mixing tank, and in the mixing tank, a reaction with an acid is carried out to convert the carbon dioxide gas retained in the form of a carbonate solution back into a free gas phase and discharge the same from the indoor environment. As a result of the said reaction, the carbon dioxide gas and a salt solution are formed. The resulting salt solution is separated back to acid and base in an electrodialysis unit. The obtained basic solution is fed into the main tank to provide further carbon dioxide adsorption, and thus the basic solution in the main tank is enabled to be regenerated. On the other hand, the acid solution is used in the next cycle to supply the salt solution to the electrodialysis unit and to discharge the adsorbed carbon dioxide gas from the indoor environment.

As can be understood from the above explanation, in the state of the art methods, closed-loop systems are used for regenerating the basic solution used to adsorb the carbon dioxide gas from the indoor air. The said system comprises at least seven different tanks, and the system operates in a specific flow sequence by means of fluid transfers between the said tanks. The said systems comprise sensors which monitor the liquid level in each tank and pump/valve components which provide the liquid transfer between the tanks, thereby requiring a complex structure. Controlling such systems of a complex structure is critically important in terms of both electronic hardware/software and safety, which slows down the system's operation. Moreover, the ion exchange membranes and other selectively permeable structures used in the electrodialysis unit for regenerating the basic solution do not have high thermal resistance, which necessitates the addition of auxiliary heating/cooling elements such as a Peltier unit to ensure temperature control. Furthermore, the low chemical resistance of the selectively permeable structures to high-concentration acid-base solutions requires that the concentration of the basic solution in the tank where carbon dioxide is retained be kept low, which in turn increases the regeneration frequency of the said solution. Moreover, after the carbon dioxide adsorbed to result in carbonate by means of the basic solution reacts with acid and returns to a gaseous phase, the said carbon dioxide gas is discharged into the external environment through a specially designed discharge line, which requires the air purifiers to be always connected to the external environment via a discharge line, thus reducing the flexibility of the product. In addition, electrochemical reactions occurring during the operation of the electrodialysis unit generate hydrogen gas (H₂). Since the hydrogen gas poses an explosion risk when the concentration thereof exceeds a certain level, it must also be discharged into the external environment through a discharge line. This also requires the air purifiers to be always connected to the external environment via a discharge line, reducing the flexibility of the product.

Therefore, there is a need for a carbon dioxide adsorption system with a simple structure, which allows the use of a high-concentration basic solution, and which does not require an additional discharge line to discharge the carbon dioxide gas to the outer environment.

The aim of the present invention is the realization of a carbon dioxide adsorption system with a simple structure, which is suitable to be used in air purifiers, which allows the use of a high-concentration basic solution, and which does not require an additional discharge line to discharge the carbon dioxide gas to the outer environment.

Another aim of the present invention is the realization of a carbon dioxide adsorption system which does not require any electrodialysis unit and thus does not require electrochemical reactions to generate hydrogen gas.

The carbon dioxide adsorption system realized in order to attain the aim of the present invention, explicated in the first claim and the respective claims thereof comprises at least one first tank having an air inlet through which the air with a relatively high level of carbon dioxide enters and an air outlet through which the air having a lower carbon dioxide level than that at the air inlet is discharged and which stores a basic solution suitable for adsorbing the carbon dioxide contained in the air received from the air inlet; at least one second tank which is connected to the first tank to perform fluid transfer to the first tank, which has at least one water inlet enabling the water to be filled therein and which stores the water filled through the water inlet; and at least one third tank which stores at least one chemical used in the preparation of the said basic solution and which is connected to the first tank to supply the said chemical to the first tank. In the carbon dioxide adsorption system of the present invention, when the a basic solution which adsorbs the carbon dioxide contained in the air received through the air inlet to purify the air is desired to be prepared in the first tank, a certain amount of water from the second tank which allows the basic solution to be at a certain concentration and a certain amount of chemical from the third tank which allows the basic solution to be at a certain concentration are supplied to the first tank, and are mixed in the first tank to obtain the basic solution at the desired concentration. When the concentration of the basic solution, which decreases due to use or, in other words, depending on the amount of adsorbed carbon dioxide, reaches a predetermined threshold value, the basic solution in the first tank is discharged by the user, for example, into a sink or drainage system, such that the first tank is emptied. Following the said discharge process, a new high-concentration basic solution is prepared in the first tank by means of the water stored in the second tank and the chemical stored in the third tank. Thus, the air purification process is enabled to be realized with high efficiency.

In an embodiment of the present invention, the carbon dioxide adsorption system comprises mixing means which are arranged on or in the first tank and which are configured to mix the water and the chemical in the first tank. By means of the said mixing means, the basic solution is enabled to be quickly prepared in the first tank.

In an embodiment of the present invention, the carbon dioxide adsorption system comprises at least one first fluid outlet which is arranged on the first tank and which enables components such as a pipe or hose for carrying the basic solution in the first tank out of the first tank to be connected thereto. In this embodiment, the basic solution in the first tank which ages due to use exits through the first fluid outlet and is discharged without user intervention by means of components connected, from the end not connected to the first tank, to a location such as a sink or drainage system where waste is collected.

In an embodiment of the present invention, the carbon dioxide adsorption system comprises at least one fourth tank which is connected to the first tank so as to enable the aged basic solution in the first tank to be transferred therein. In this embodiment, the aged basic solution in the first tank, the concentration of which decreases to a certain value, is transferred from the first tank to the fourth tank such that the first tank is emptied and a new high-concentration basic solution is prepared in the first tank. The aged basic solution collected in the fourth tank can be discharged at any time by the user, for example into a sink or drainage system, so as to empty the fourth tank.

In an embodiment of the present invention, the carbon dioxide adsorption system comprises at least one second fluid outlet which is arranged on the fourth tank and which enables components such as a pipe or hose for carrying the basic solution in the fourth tank out of the fourth tank to be connected thereto. In this embodiment, the low-concentration basic solution collected in the fourth tank exits through the second fluid outlet and is discharged without user intervention by means of components connected, from the end not connected to the fourth tank, to a location such as a sink or drainage system where waste is collected.

In an embodiment of the present invention, the carbon dioxide adsorption system comprises at least one fluid line which is connected at one end to the second tank and at the other end to the fourth tank so as to provide fluid communication between the second tank and the fourth tank and which carries at least a portion of the water in the second tank to the fourth tank. In this embodiment, before being discharged, the low-concentration basic solution stored in the fourth tank is diluted with the water supplied to the fourth tank through the fluid line and discharged in a diluted form. Thus, during the discharge process, the risk of the said basic solution causing any harm to the users or the environment is eliminated.

In an embodiment of the present invention, the carbon dioxide adsorption system comprises at least one first air discharge hole which is arranged on the first tank and which enables at least a portion of the air in the first tank to exit the first tank. By means of the said first air discharge hole, the pressure equalization process is performed in the first tank before the low-concentration basic solution is supplied from the first tank to the fourth tank such that any blockage problem during the supplying process is prevented.

In an embodiment of the present invention, the carbon dioxide adsorption system comprises at least one second air discharge hole which is arranged on the second tank and which enables at least a portion of the air in the second tank to exit the second tank. By means of the said second air discharge hole, the pressure equalization process is performed in the second tank before the water is supplied from the second tank to the first tank or the fourth tank such that any blockage problem during the supplying process is prevented.

In an embodiment of the present invention, the carbon dioxide adsorption system comprises at least one third air discharge hole which is arranged on the fourth tank and which enables at least a portion of the air in the fourth tank to exit the fourth tank. By means of the said third air discharge hole, the pressure equalization process is performed in the fourth tank before the basic solution in the fourth tank is discharged out of the fourth tank such that any blockage problem during the discharge process is prevented.

In an embodiment of the present invention, the carbon dioxide adsorption system comprises at least one fifth tank which stores at least one acid solution providing the neutralization of the aged basic solution in the first tank and which is connected to the first tank so as to deliver the said acid solution into the first tank. In this embodiment, before the basic solution which is not at a concentration effective for carbon dioxide adsorption and which needs to be discharged via the first tank or the fourth tank is discharged from the first tank, a suitable amount of acid solution is fed from the fifth tank into the first tank so as to neutralize the basic solution in the first tank. Thus, during the discharge process, the risk of the said basic solution causing any harm to the users or the environment is eliminated.

In an embodiment of the present invention, the carbon dioxide adsorption system comprises at least one first sensor which can be configured as a sensor for detecting the concentration of the basic solution in the first tank and for determining the carbon dioxide removal rate, as a conductivity sensor for detecting the conductivity of the basic solution or as a pH sensor for detecting the acidity/alkalinity ratio of the basic solution. In this embodiment, the concentration of the basic solution in the first tank is detected by the first sensor, and when the concentration level determined by the first sensor is equal to the predetermined threshold value, the basic solution in the first tank can be discharged.

In an embodiment of the present invention, the carbon dioxide adsorption system comprises at least one second sensor which is configured to detect the fluid level in the fourth tank. When the fluid level detected by the second sensor reaches a predetermined value, the low-concentration basic solution stored in the fourth tank can be discharged.

In an embodiment of the present invention, the carbon dioxide adsorption system comprises at least one third sensor which is configured to detect whether there is a solution in the first tank. If the third sensor detects that there is no solution in the first tank, the process of preparing a new high-concentration basic solution in the first tank can be started.

In an embodiment of the present invention, the carbon dioxide adsorption system comprises at least one fourth sensor which is configured to detect the fluid level in the first tank and/or the second tank. While the basic solution is being prepared in the first tank, the amount of water supplied from the second tank to the first tank is detected by the fourth sensor so as to ensure that an amount of water reaching the desired solution concentration is supplied from the second tank to the first tank.

The present invention also relates to an air purifier which comprises a carbon dioxide adsorption system of the type described above. By means of the carbon dioxide adsorption system, the need for using an electrodialysis unit for the regeneration process in the air purifier is eliminated, and thus, the safety of the device is improved by preventing the release of hydrogen gas, which poses a risk of explosion due to the high concentration thereof during the electrochemical processes performed by the said unit. Moreover, the need for using an additional discharge line for the discharge of the adsorbed carbon dioxide gas to the external environment in the air purifier is eliminated, thus increasing the flexibility of the device. In addition, a control unit provided in the said air purifier performs data exchange with the sensors provided in the carbon dioxide adsorption system so as to ensure that the processes of preparing the basic solution in the first tank and discharging the basic solution in the first tank when the concentration thereof falls to a certain threshold level due to use are performed entirely automatically, or alternatively, that the user is automatically informed or warned via a user interface by audio and/or visual means so that such processes can be performed manually by the user. Consequently, the air purifier is enabled to perform a more effective air purification process and improve user satisfaction.

By means of the present invention, a carbon dioxide adsorption system and an air purifier comprising the said carbon dioxide adsorption system are realized, which ensure that the carbon dioxide in the air having a relatively high level of carbon dioxide is adsorbed by a basic solution at a certain concentration prepared in the first tank so as to reduce the carbon dioxide level of the air, and that the basic solution of which the concentration reduces over time to reach a certain threshold value, in other words, the basic solution which ages, is discharged either directly from the first tank or from the fourth tank, which acts as a low-concentration basic solution receptacle connected to the first tank.

The model embodiments related to the carbon dioxide adsorption system realized in order to attain the aim of the present invention are illustrated in the attached figures, where:

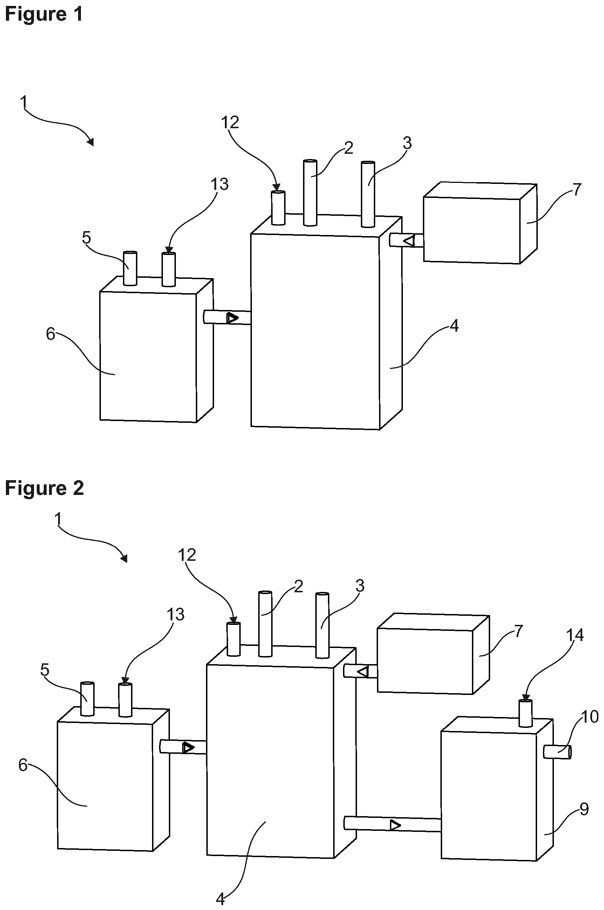

Figure 1 - is the schematic view of the carbon dioxide adsorption system in an embodiment of the present invention.
Figure 2 - is the schematic view of the carbon dioxide adsorption system in an embodiment of the present invention.

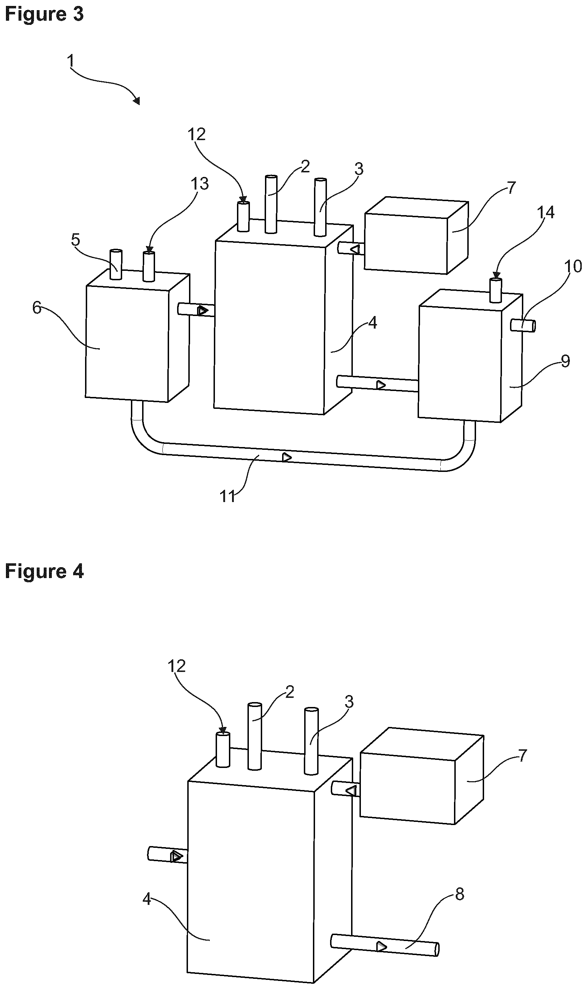

Figure 3 - is the schematic view of the carbon dioxide adsorption system in an embodiment of the present invention.
Figure 4 - is the schematic view of the first tank and third tank group in the carbon dioxide adsorption system in an embodiment of the present invention.

The elements illustrated in the figures are numbered as follows:
1. Carbon dioxide adsorption system
2. Air inlet
3. Air outlet
4. First tank
5. Water inlet
6. Second tank
7. Third tank
8. First fluid outlet
9. Fourth tank
10. Second fluid outlet
11. Fluid line
12. First air discharge hole
13. Second air discharge hole
14. Third air discharge hole

The carbon dioxide adsorption system (1) comprises at least one first tank (4) which has an air inlet (2) and an air outlet (3) and which stores a basic solution suitable for adsorbing the carbon dioxide in the air. By means of the carbon dioxide adsorption system (1), the air with a relatively low oxygen level and high carbon dioxide level in a closed room environment, namely, the environment wherein the air is purified, enters the first tank (4) through the air inlet (2). The carbon dioxide in the air entering the first tank (4) is adsorbed by the basic solution stored in the first tank (4), and the air with reduced carbon dioxide level is discharged to the relevant environment through the air outlet (3).

The carbon dioxide adsorption system (1) of the present invention comprises at least one second tank (6) which is arranged so as to be in fluid communication with the first tank (4), which has at least one water inlet (5) and which stores therein the water taken through the water inlet (5); and at least one third tank (7) which is arranged so as to be in fluid communication with the first tank (4) and which stores therein the chemical used in the preparation of the basic solution. The fluid connection between the first tank (4) and the second tank (6) or the third tank (7) is realized, for example, via a pipe or hose, and is controlled by pumps and/or valve systems. When a basic solution at a certain concentration is desired to be prepared in the first tank (4), first, a certain amount of water is supplied from the second tank (6) to the first tank (4) and then, a certain amount of chemical is supplied from the third tank (7) into the first tank (4). In different embodiments, first the chemical and then the water may be supplied into the first tank (4), or both the chemical and the water may be supplied simultaneously. As a result of the mixing of the said water and chemical in the first tank (4), the basic solution at the concentration suitable for adsorbing carbon dioxide in the air is prepared and stored in the first tank (4). In different embodiments, the third tank (7) stores the metal hydroxide (MOH) chemical in powder, granule, pod, or concentrated solution form. When the concentration of the said basic solution reaches a critical threshold at which the carbon dioxide adsorption can no longer be performed with the desired efficiency, the basic solution in the first tank (4) is emptied by the user into a suitable location such as a sink/drainage system, and then a new high-concentration basic solution is prepared in the first tank (4) by means of the water supplied from the second tank (6) and the chemical supplied from the third tank (7). In the carbon dioxide adsorption system (1) of the present invention, by means of storing the water and the chemical required for the preparation of the carbon dioxide adsorbing basic solution respectively in the second tank (6) and third tank (7), it becomes possible to prepare the basic solution with the desired concentration in the first tank (4) without requiring any user intervention in the first tank (4) wherein the carbon dioxide adsorption process is performed.

In an embodiment of the present invention, the first tank (4) comprises mixing means (not shown in figures) which are configured to mix the water supplied from the second tank (6) and the chemical supplied from the third tank (7). After the water is supplied from the second tank (6) and the chemical is supplied from the third tank (7) into the first tank (4) to prepare the basic solution, the mixing means are activated to ensure the mixing of the water and the chemical, thus providing the rapid preparation of the basic solution in the first tank (4). In the embodiments of the present invention, the said mixing means may be provided in different forms such as magnetic mixer, mechanical arm, a pump performing a cycle on the first tank (4), or air supply components allowing bubble formation.

In an embodiment of the present invention, the first tank (4) comprises at least one first fluid outlet (8) which enables a fluid carrier such as a hose or pipe to be connected thereto. As the basic solution stored in the first tank (4) is used, in other words, as the amount of carbon dioxide adsorbed by the basic solution increases, the concentration of the said basic solution decreases. When the concentration of the basic solution reaches a critical threshold at which the carbon dioxide cannot be adsorbed with the desired efficiency, the basic solution in the first tank (4) is discharged through the first fluid outlet (8). The end, not connected to the first fluid outlet (8), of the hose or the pipe connected to the first fluid outlet (8) is connected, for example, to a sink/drainage system, and the basic solution of which the concentration reaches the relevant threshold value is discharged directly to the sink/drainage system without any risk of contact with the user. After the low-concentration basic solution in the first tank (4) is completely discharged through the first fluid outlet (8), the high-concentration basic solution is prepared in the first tank (4) by means of the water supplied from the second tank (6) and the chemical supplied from the third tank (7).

In an embodiment of the present invention, the carbon dioxide adsorption system (1) comprises at least one fourth tank (9) which is arranged to be in fluid communication with the first tank (4) and which is suitable for storing the aging basic solution from the first tank (4). The fluid connection between the first tank (4) and the fourth tank (9) is realized, for example, via a pipe or hose, and is controlled by pumps and/or valve systems. In this embodiment, when the concentration of the basic solution in the first tank (4) reaches a critical threshold at which the carbon dioxide cannot be adsorbed with the desired efficiency, the said basic solution is transferred from the first tank (4) to the fourth tank (9). The low-concentration basic solution collected in the fourth tank (9) is discharged by the user into a suitable location such as a sink/drainage system, and then, a new high-concentration basic solution is prepared in the first tank (4) by means of the water supplied from the second tank (6) and the chemical supplied from the third tank (7). The first tank (4) and the fourth tank (9) may have equal volumes, or in different embodiments of the present invention, the first tank (4) may have a greater or smaller volume than the fourth tank (9). In case the fourth tank (9) has a smaller volume than the first tank (4), the low-concentration basic solution in the first tank (4) is gradually filled into the fourth tank (9). In case the fourth tank (9) has a greater volume than the first tank (4), the low-concentration basic solution is collected in the fourth tank (9) over time, and the frequency of discharge is reduced.

In an embodiment of the present invention, the fourth tank (9) comprises at least one second fluid outlet (10) which enables a fluid carrier such as a hose or pipe to be connected thereto. In this embodiment, when the concentration of the basic solution in the first tank (4) reaches a critical threshold at which the carbon dioxide cannot be adsorbed with the desired efficiency, the said basic solution is transferred from the first tank (4) to the fourth tank (9). The end, not connected to the second fluid outlet (10), of the hose or the pipe connected to the second fluid outlet (10) is connected, for example, to a sink/drainage system, and the aged basic solution collected in the fourth tank (9) is discharged directly to the sink/drainage system without any risk of contact with the user.

In an embodiment of the present invention, the carbon dioxide adsorption system (1) comprises at least one fluid line (11) which extends between the second tank (6) and the fourth tank (9) and which enables the water in the second tank (6) to be supplied to the fourth tank (9). The fluid line (11) between the second tank (6) and the fourth tank (9) is, for example, a pipe or hose, and is controlled by pumps and/or valve systems. In this embodiment, the low-concentration basic solution collected in the fourth tank (9) is diluted by the water supplied from the second tank (6) through the fluid line (11), and is then discharged out of the fourth tank (9). By means of the dilution of the basic solution, the risk of the said basic solution causing any harm to the users or the environment during the discharge process is eliminated.

In an embodiment of the present invention, the carbon dioxide adsorption system (1) comprises at least one first air discharge hole (12) which is arranged on the first tank (4). The said first air discharge hole (12) can be opened and closed, for example, by means of an electromagnetic or manual valve. In this embodiment, before supplying the low-concentration basic solution from the first tank (4) to the fourth tank (9), a portion of the air in the first tank (4) is discharged through the first air discharge hole (12) so as to perform the pressure equalization process.

In an embodiment of the present invention, the carbon dioxide adsorption system (1) comprises at least one second air discharge hole (13) which is arranged on the second tank (6). The said second air discharge hole (13) can be opened and closed, for example, by means of an electromagnetic or manual valve. In this embodiment, before supplying the water from the second tank (6) to the first tank (4) and the fourth tank (9), a portion of the air in the second tank (6) is discharged through the second air discharge hole (13) so as to perform the pressure equalization process.

In an embodiment of the present invention, the carbon dioxide adsorption system (1) comprises at least one third air discharge hole (14) which is arranged on the fourth tank (10). The said third air discharge hole (14) can be opened and closed, for example, by means of an electromagnetic or manual valve. In this embodiment, before discharging the low-concentration basic solution from the fourth tank (6) to the outside of the system (1), a portion of the air in the fourth tank (9) is discharged through the third air discharge hole (14) so as to perform the pressure equalization process.

In an embodiment of the present invention, the carbon dioxide adsorption system (1) comprises at least one fifth tank (not shown in figures) which is in fluid communication with the first tank (4) and which stores an acid solution suitable for neutralizing the basic solution in the first tank (4). The fluid connection between the first tank (4) and the fifth tank (9) is realized, for example, via a pipe or hose, and is controlled by pumps and/or valve systems. In this embodiment, before the basic solution in the first tank (4), which reaches the threshold concentration level, is discharged from the system (1), an appropriate amount of the acid solution stored in the fifth tank is supplied to the first tank (4) so as to neutralize the basic solution. Thus, the low-concentration basic solution is discharged in neutral form through the first tank (4) or the fourth tank (9), eliminating the risk of harming the user or the environment during the discharge process.

In an embodiment of the present invention, the carbon dioxide adsorption system (1) comprises at least one first sensor (not shown in figures) which is configured to detect the concentration of the basic solution in the first tank (4). The said first sensor may be, for example, a sensor which is configured to determine the rate of carbon dioxide removal, a conductivity sensor which is configured to detect the conductivity of the basic solution, or a pH sensor which is configured to detect the acidity/basicity ratio of the basic solution. In this embodiment, the concentration of the basic solution in the first tank (4) is continuously detected by the first sensor, and when the concentration level determined by the first sensor is equal to or approximately equal to a predetermined threshold value, the carbon dioxide removal process is terminated, and it is ensured that the basic solution in the first tank (4) is discharged a new high-concentration basic solution is prepared in the first tank (4).

In an embodiment of the present invention, the carbon dioxide adsorption system (1) comprises at least one second sensor (not shown in figures) which is configured to detect the fluid level in the fourth tank (9). When the fluid level detected by the second sensor reaches a predetermined value, the low-concentration basic solution stored in the fourth tank (9) is discharged. In addition, particularly in the embodiment wherein the low-concentration basic solution in the fourth tank (9) is diluted with the water taken from the second tank (6) and then discharged, when the liquid level detected by the second sensor is equal to a predetermined liquid level, the water supply from the second tank (6) to the fourth tank (9) is started.

In an embodiment of the present invention, the carbon dioxide adsorption system (1) comprises at least one third sensor (not shown in figures) which is configured to detect whether the first tank (4) is empty or not. The third sensor is, for example, a sensor which is configured to detect the presence of basic solution in the first tank (4), such as a float, a weight sensor, or a mechanical switch. In this embodiment, the third sensor detects whether the entire amount of the aging basic solution, i.e., the solution with reduced concentration due to time and use, has been discharged from the first tank (4). If the third sensor detects that the basic solution in the first tank (4) has been fully discharged, the preparation of a new high-concentration basic solution in the first tank (4) can be started.

In an embodiment of the present invention, the carbon dioxide adsorption system (1) comprises at least one fourth sensor (not shown in figures) which is configured to detect the fluid level in the first tank (4) and/or the second tank (6). While the basic solution is being prepared in the first tank (4), the amount of water supplied from the second tank (6) to the first tank (4) is detected by the fourth sensor so as to ensure that an amount of water allowing to reach the desired solution concentration is supplied from the second tank (6) to the first tank (4).

The present invention also relates to an air purifier which comprises a carbon dioxide adsorption system (1) of the type described above.

By means of the carbon dioxide adsorption system (1) of the present invention, the carbon dioxide in the air having a relatively high carbon dioxide level is adsorbed by the basic solution prepared at a specific concentration in the first tank (4) so as to lower the carbon dioxide level of the air. In the carbon dioxide adsorption system (1), by storing the water and the corresponding chemical in the system (1) for preparing the said basic solution, it becomes possible to prepare the basic solution at the desired concentration. Moreover, by means of the said carbon dioxide adsorption system (1), the basic solution of which the concentration decreases with use and reaches a specific threshold value is discharged either directly from the first tank (4) or from the fourth tank (9), which acts as a low-concentration basic solution reservoir connected to the first tank (4). In addition, by diluting the low-concentration basic solution with the water from the second tank (6) or neutralizing the same with the acid solution in the fifth tank before being discharged, the risk of the basic solution harming the user or the environment during the discharge process is eliminated.

## Claims

1. A carbon dioxide adsorption system (1) **comprising** at least one first tank (4) which has an air inlet (2) and an air outlet (3) and which stores a basic solution suitable for adsorbing the carbon dioxide in the air, **characterized by** at least one second tank (6) which is arranged so as to be in fluid communication with the first tank (4), which has at least one water inlet (5) and which stores therein the water taken through the water inlet (5); and at least one third tank (7) which is arranged so as to be in fluid communication with the first tank (4) and which stores therein the chemical used in the preparation of the basic solution.

2. A carbon dioxide adsorption system (1) as in Claim 1, **characterized by** the first tank (4) comprising mixing means which are configured to mix the water supplied from the second tank (6) and the chemical supplied from the third tank (7).

3. A carbon dioxide adsorption system (1) as in Claim 1 or 2, **characterized by** the first tank (4) comprising at least one first fluid outlet (8) which enables a fluid carrier such as a hose or pipe to be connected thereto.

4. A carbon dioxide adsorption system (1) as in any one of the above claims, **characterized by** at least one fourth tank (9) which is arranged to be in fluid communication with the first tank (4) and which is suitable for storing the aging basic solution from the first tank (4).

5. A carbon dioxide adsorption system (1) as in Claim 4, **characterized by** the fourth tank (9) comprising at least one second fluid outlet (10) which enables a fluid carrier such as a hose or pipe to be connected thereto.

6. A carbon dioxide adsorption system (1) as in Claim 4 or 5, **characterized by** at least one fluid line (11) which extends between the second tank (6) and the fourth tank (9) and which enables the water in the second tank (6) to be supplied to the fourth tank (9).

7. A carbon dioxide adsorption system (1) as in any one of the above claims, **characterized by** at least one first air discharge hole (12) which is arranged on the first tank (4).

8. A carbon dioxide adsorption system (1) as in any one of the above claims, **characterized by** at least one second air discharge hole (13) which is arranged on the second tank (6).

9. A carbon dioxide adsorption system (1) as in any one of Claims 4 to 9, **characterized by** at least one third air discharge hole (14) which is arranged on the fourth tank (10).

10. A carbon dioxide adsorption system (1) as in any one of the above claims, **characterized by** at least one fifth tank which is in fluid communication with the first tank (4) and which stores an acid solution suitable for neutralizing the basic solution in the first tank (4).

11. A carbon dioxide adsorption system (1) as in any one of the above claims, **characterized by** at least one first sensor which is configured to detect the concentration of the basic solution in the first tank (4).

12. A carbon dioxide adsorption system (1) as in any one of the above claims, **characterized by** at least one second sensor which is configured to detect the fluid level in the fourth tank (9).

13. A carbon dioxide adsorption system (1) as in any one of the above claims, **characterized by** at least one third sensor which is configured to detect whether the first tank (4) is empty or not.

14. A carbon dioxide adsorption system (1) as in any one of the above claims, **characterized by** at least one fourth sensor which is configured to detect the fluid level in the first tank (4) and/or the second tank (6).

15. An air purifier comprising a carbon dioxide adsorption system (1) as in any one of the above claims.
